Europäisches Patentamt

European Patent Office

Office européen des brevets

(19)

(11) **EP 0 812 414 B2**

(12) **NEW EUROPEAN PATENT SPECIFICATION**

(45) Date of publication and mention
of the opposition decision:
**14.06.2006 Bulletin 2006/24**

(45) Mention of the grant of the patent:
**09.07.2003 Bulletin 2003/28**

(21) Application number: **95911033.9**

(22) Date of filing: **28.02.1995**

(51) Int Cl.:
*G01L 19/04* $^{(2006.01)}$     *G01L 27/00* $^{(2006.01)}$

(86) International application number:
**PCT/US1995/002037**

(87) International publication number:
**WO 1996/027124 (06.09.1996 Gazette 1996/40)**

(54) **PRESSURE TRANSMITTER WITH REMOTE SEAL DIAPHRAGM AND CORRECTION FOR TEMPERATURE AND VERTICAL POSITION ( ALSO DIAPHRAGM STIFFNESS )**

DRUCKÜBERTRAGER MIT ENTFERNTER TRENNMEMBRAN UND KORREKTUR DER TEMPERATUR SOWIE HÖHE ( AUCH MEMBRANSTEIFHEIT )

TRANSMETTEUR DE PRESSION MUNI D'UN DIAPHRAGME D'ETANCHEITE A DISTANCE ET CORRECTION DE LA TEMPERATURE ET DE LA HAUTEUR ( AINSI QUE DE LA RAIDEUR DU DIAPHRAGME)

(84) Designated Contracting States:
**DE FR GB IT**

(43) Date of publication of application:
**17.12.1997 Bulletin 1997/51**

(73) Proprietor: **ROSEMOUNT INC.**
**Eden Prairie, MN 55344 (US)**

(72) Inventor: **GUETSCHOW, Robert, A.**
**Minnetonka, MN 55345 (US)**

(74) Representative: **Bohnenberger, Johannes et al**
**Meissner, Bolte & Partner**
**Postfach 86 06 24**
**81633 München (DE)**

(56) References cited:
**EP-A- 0 421 394**

- **PATENT ABSTRACTS OF JAPAN vol. 12 no. 233 (P-724) ,5 July 1988 & JP,A,63 026544 (YAMATAKE HONEYWELL CO LTD) 4 February 1988,**
- **PROCEEDINGS IECON '84 - 1984 INTERNATIONAL CONFERENCE ON INDUSTRIAL ELECTRONICS, CONTROL AND INSTRUMENTATION, vol. 2, 22 - 26 October 1984 TOKYO (JP), pages 1081-1086, J.E. CORLEY ET AL. 'THE APPLICATION OF SMART ELECTRONICS TO IMPROVE PRESSURE TRANSMITTER PERFORMANCE'**
- **ADVANCES IN INSTRUMENTATION AND CONTROL, vol. 47, no. 2, 1992 RESEARCH TRIANGLE PARK US, pages 1149-1160, XP 000328949 H.R. JAQUITH 'IMPROVED DESIGN AND MOUNTING OF REMOTE SEAL LIQUID LEVEL TRANSMITTERS'**
- **JP 2201225 - Abstract - D3a**
- **JP 2201225 - Translation - D3b**
- **ATP-30-Nr. 8 (1998), H. Waldschmidt, "Messwertkorrektur durch Signalartbereitung im Multi-Sensorsystem" - D4**
- **Pages from "Drucksensoren", E. Pfeifer, R.Wertschützky, Berlin 1989- D5**

**Description**

BACKGROUND OF THE INVENTION

This invention relates to a field-mounted pressure transmitter having a remote diaphragm for measuring pressure of a process medium. More particularly, the present invention relates to providing a corrected transmitter output to compensate for errors caused by the remote diaphragm.

Transmitters sensing process variables, such as differential pressure, gage pressure and process temperature, are known. The transmitters typically are mounted in the vicinity of a process medium to be measured, at a process control Industry installation. Transmitters provide an output representative of sensed process variables. This output is then communicated over a two-wire current loop to a remote control room.

In many cases, the transmitter has a transmitter housing that contains a pressure sensor and one or two diaphragms fluidically coupled to the pressure sensor. The process medium to be measured is plumbed to the transmitter housing to contact the diaphragm(s), and the diaphragm(s) transmit the process medium pressure to the pressure sensor. In other cases, the transmitter comprises a remote diaphragm separated from the transmitter housing by a capillary tube, which tube is typically flexible and can have a length of a fraction of a meter or as long as tens of meters. The process medium contacts the remote diaphragm, which conveys the exerted pressure to the pressure sensor disposed In the transmitter housing via a substantially incompressible fluid filling the capillary tube.

These latter transmitters, utilizing one or more remote diaphragms, are the subject of the present invention. Existing remote diaphragms are subject to errors caused by temperature changes of the surroundings. With a constant process medium pressure, the transmitter output can change with the outside ambient temperature due to thermal effects on the remote diaphragm, and the connected capillary tube. The resulting errors are dependent on the vertical position of the remote diaphragm relative to the transmitter. Because the vertical distance between the remote diaphragm and the transmitter is specific to a selected installation, predetermination of the thermal effects is difficult.

Known remote diaphragm transmitters such as described in EP-421 394 have a temperature sensor disposed in the transmitter housing, and the output of such temperature sensor is used by the transmitter circuitry to provide a relatively accurate transmitter output, corrected for the thermal response of the various transmitter components. Such known transmitters, however, do not correct for temperature changes of installation-specific remote diaphragm systems where there Is a net vertical separation between the remote diaphragms.

In a paper of H.R.Jaquith Improved design and mounting of remote seal liquid level transducers' in Advances in Instrumentation and Control, vol.47, no.2, 1992 (US), pages 1149-1160, a net vertical separation insensitive arrangement is indicated.

Therefore, there is a need for a means which can compensate for the measurement Inaccuracies Introduced by thermal effects on a remote diaphragm transmitter. For highest accuracy, such a means should be as installation-specific as possible i.e., it should account for the specific installation geometry desired for the transmitter, as well as for the particular type of incompressible fill fluid(s) used, length of the capillary tube(s), and so forth. Furthermore, such a means should be easy to install and be compatible with many existing transmitters to reduce implementation costs.

SUMMARY OF THE INVENTION

According to a first aspect of the present invention there is provided a transmitter for measuring a process pressure and comprising a pressure sensor; a temperature sensor providing an input temperature signal representing a fill fluid temperature, a first remote pressure sensitive diaphragm disposed at a vertical position and coupled to the pressure sensor by a first capillary tube filled with a fill fluid having a density as a function of fill fluid temperature; and an input circuit operably connected to at least the pressure sensor and providing an Intermediate pressure signal at least roughly representative of the process pressure; wherein a correcting circuit is provided operably coupled to the temperature sensor and to the input circuit to process the intermediate pressure signal by compensating for the fill fluid density both as a function of the temperature and by reference to the elevation of the first remote pressure sensitive diaphragm, and the diaphragm stiffness, as a function of said fill fluid temperature, by means of a single polynomial equation, in order to provide a compensated output more closely representative of the process pressure.

According to a second aspect of the present invention there is provided a method of installing a pressure transmitter comprising a pressure sensor and a first remote pressure-sensitive diaphragm disposed at a vertical position and coupled to the pressure sensor by a first fluid-filled capillary tube, the first remote diaphragm being moveable relative to the pressure transmitter, the pressure transmitter also comprising a characterization system that receives a pressure signal from the pressure sensor and a temperature signal representing a fill fluid temperature and provides a transmitter output as a function of the pressure and temperature signals, characterized in that the method comprises the steps of: ascertaining the elevation of the first remote diaphragm; and programming the characterization system with a series of constants for use in a single polynomial equation varying with said fill fluid temperature for obtaining a more accurate process pressure as a function of the elevation.

BRIEF DESCRIPTION OF THE DRAWINGS

FIG. 1 is a schematic elevational view of a transmitter having a remote diaphragm system in an installation where a gage pressure or an absolute pressure of a process medium is measured.
FIG. 2 is a graph of diaphragm stiffness effect as a function of temperature.
FIG. 3 is a graph of fill fluid density effect as a function of temperature.
FIG. 4 is a graph showing the combination of the effects of FIGS. 2 and 3 as function of temperature.
FIG. 5 is a schematic more detailed view of the transmitter of FIG. 1 showing a first embodiment of the present invention.
FIG. 6 is a flow chart of one aspect of the first embodiment of the present invention.
FIG. 7 is another schematic more detailed view of the transmitter of FIG. 1 showing a first embodiment of the present invention.
FIG. 8 is a flow chart of one aspect of the first embodiment of the present invention.
FIG. 9 is a flow chart of another aspect of a second embodiment of the present invention.
FIG. 10 is another schematic elevational view of a transmitter and remote diaphragm system.
FIG. 11 is another schematic elevational view of the transmitter of FIG. 1 but having a modified remote diaphragm system in an installation where a differential pressure of the process medium is measured.

DETAILED DESCRIPTION OF THE PREFERRED EMBODIMENTS

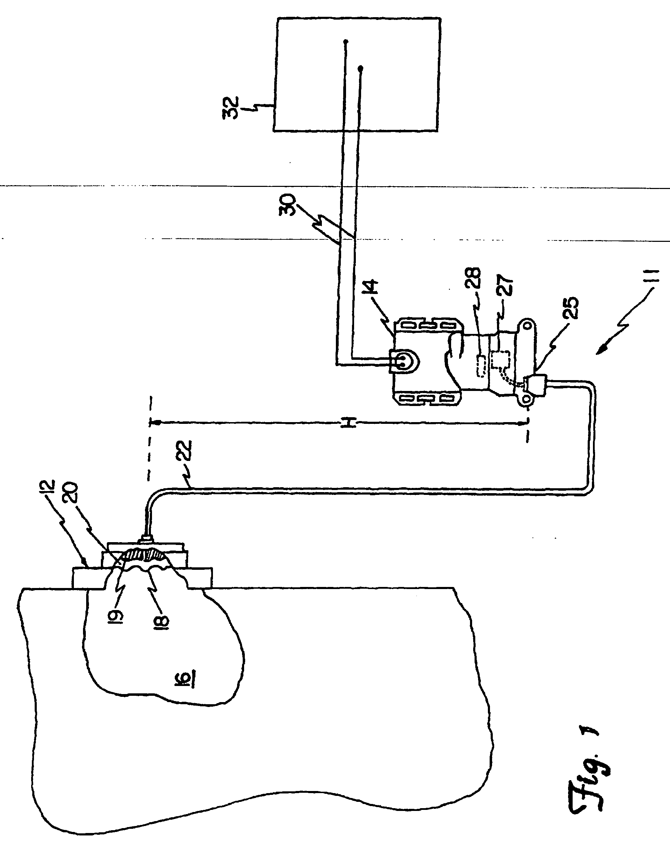

FIG. 1 shows a typical transmitter 11 having a remote diaphragm system 12 connectedto a transmitter housing 14. The transmitter 11 measures the pressure of a process medium 16. The remote diaphragm system 12 includes thin, flexible diaphragm 18 which contacts the process medium. System 12 also includes backplate 19 which, together with diaphragm 18, define a cavity 20. Capillary tube 22 couples cavity 20 to a pressure sensor 27 disposed in transmitter housing 14, such coupling being made via a transmitter housing diaphragm 25 and a sealed fluid system connecting diaphragm 25 with sensor 27. The sealed fluid system, as well as cavity 20 and capillary tube 22, is filled with a suitable fluid (not shown) for transmitting the process pressure to sensor 27. Fluid may include silicone oil, glycerin and water, propylene glycol and water, or any other suitable fluid which preferably is substantially incompressible.
When process pressure is applied from process medium 16, diaphragm 18 is typically displaced thus transmitting the measured pressure from remote diaphragm system 12 through a passage in plate 19 and through tube 22 to pressure sensor 27. The resulting pressure applied to pressure sensor 27, which can be a capacitance-based pressure cell, causes such capacitance to change. Sensor 27 can also operate on other known sensing principles, such as strain gauge technology. Circuitry within transmitter housing 14 electronically converts the capacitance into a linear 4-20 mA transmitter output signal over wire pair 30 indicative of the process pressure. Transmitter housing 14 holds a temperature sensor 28 which measures the temperature locally at the transmitter housing.
Transmitter housing 14 includes circuitry (not shown in FIG.1) which measures and compensates temperature and pressure, and provides an output over wire pair 30. The output can be either digital or analog.
The vertical distance H between diaphragm 25 and diaphragm 18 introduces a fill fluid density effect error which is a function of both H and temperature (T) of the fill fluid between diaphragms 25,18. The pressure measured by transmitter 11 can be expressed as:

$$Measured\ Pressure - P_{PROCESS} + P_{ERROR1} + P_{ERROR2} \qquad\qquad Eq.\ 1$$

where:

$$P_{ERROR1} = P_1(T)\ \text{- Diaphragm stiffness effect} \qquad\qquad Eq.\ 2$$

$$P_{ERROR2} = P_2(T,H)\ \text{- Fill fluid density effect} \qquad\qquad Eq.\ 3$$

and

$$P_{PROCESS} = Process\ pressure \qquad\qquad Eq.\ 4$$

According to the invention, the transmitter output is corrected for at least the fill fluid density effect error.

The diaphragm stiffness effect occurs when a change in process or ambient temperature causes the volume of fluid in the system to change as a result of thermal expansion. The change in fill fluid volume as a result of a change in temperature is given by:

$$\Delta V = (V_C + V_T)(C)\Delta T \qquad\qquad Eq.\ 5$$

where $\Delta V$ is the change in fill fluid volume, $V_C$ is the volume of fill fluid in cavity 20, $V_T$ is the volume of fill fluid in capillary tube 22 and transmitter 11, C is the coefficient of thermal expansion of the fill fluid, and AT is the change in temperature of the combined fill fluid volumes $V_C$ and $V_T$ relative to its temperature during the last transmitter calibration.

An increases in fill fluid volume urges diaphragm 18 away from backplate 19, causing an increased pressure by diaphragm 18 against the fill fluid, which increased pressure is transmitted to sensor 27. Similarly, if the temperature decreases, the volume of fluid in the capillary tube/remote diaphragm system decreases and causes a reduction of pressure against sensor 27. FIG. 2 is a graph of $P_{Error1}(T)$ versus T at a fixed process pressure and diaphragm stiffness.

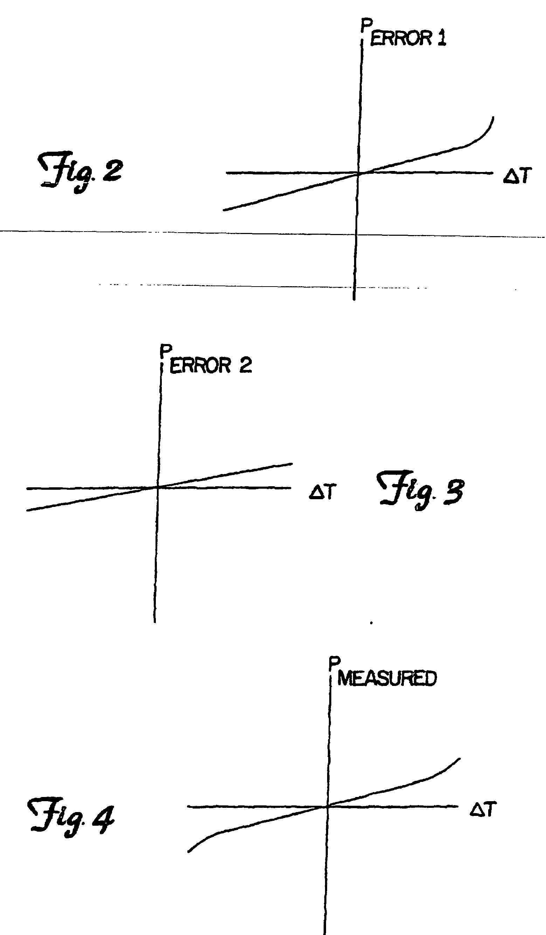

The fill fluid density effect error $P_{Error2}(T,H)$ is shown in FIG. 3. It is known to nullify the initial pressure error $P_{Error2}$ at a given temperature after installing the transmitter and thereby defining height H by calibrating or re-zeroing transmitter 11. Temperature changes relative to the temperature at the last calibration, however, create subsequent variations in the pressure measurement by changing the density of the fill fluid. This "fill fluid density effect," also termed "head temperature effect," is dependent on the distance H, the density of the fill fluid, the coefficient of expansion of the fill fluid, and the change in temperature.

The fill fluid density effect can be expressed as:

$$P_{Error2} = (H)\ (S_G)(C)\Delta T \qquad\qquad Eq.\ 6$$

where H is the distance shown in FIG. 1, $S_G$ is the specific gravity of the fill fluid in capillary tube 22, C is the coefficient of thermal expansion of the fill fluid, and $\Delta T$ represents the difference in the temperature of the fill fluid relative the temperature of the fill fluid at the last calibration of transmitter 11.

As set forth in Equation 6 and illustrated graphically in FIG. 3, the fill fluid density effect $P_{Error2}$ is proportional to the change in temperature. The slope of the graph of FIG. 3 is given by:

$$Slope = (H)(S_G)(C) \qquad\qquad Eq.\ 7$$

Thus, where $T_o$ is the temperature of the fill fluid at the last calibration of transmitter 11, the fill fluid density effect for any given temperature T is:

$$P_{Error2} = Slope \cdot (T\text{-}T_o) \qquad\qquad Eq.\ 8$$

The fill fluid density and diaphragm stiffness effects are additive and the total effect on the sensor 27 as a function of temperature is shown graphically in FIG. 4 which is a graph of equation 1. The present invention preferably includes correcting both effects.

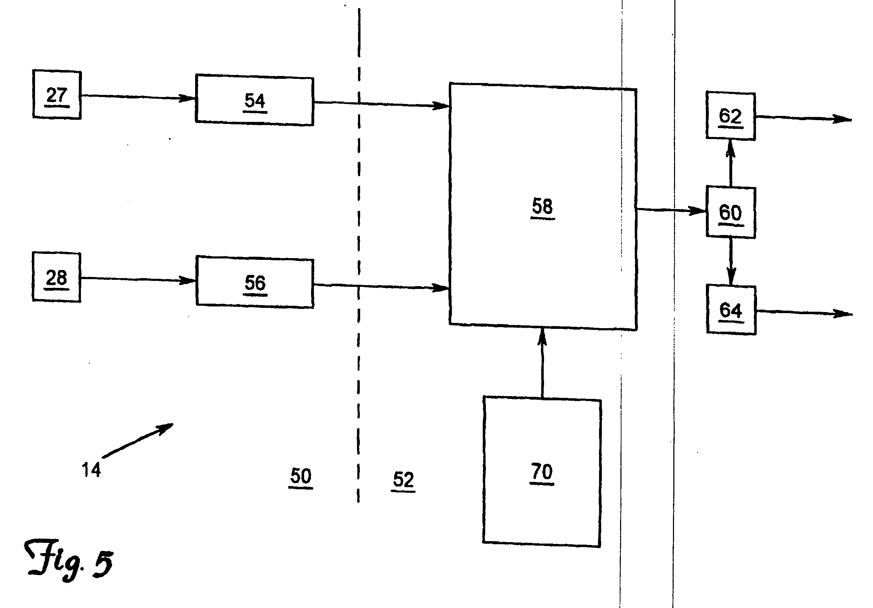

In one embodiment, transmitter housing 14 is functionally divided between sensor module 50 and electronics module 52, shown in FIG. 5. Sensor module 50 performs tasks related to measuring and compensating process variables. Electronics module 52 performs necessary calculations, data logging and output control functions. Pressure sensor 27 capacitance is provided to Capacitance-to-Digital Application Specific Integrated Circuit (ASIC) 54 which converts the capacitance signal to an intermediate value called "pressure counts," or "pcounts". Temperature sensor 28 provides a signal representative of temperature within the transmitter housing to a Resistance-to-Digital ASIC 56 where the temperature signal is converted into an intermediate value called "tcounts". Pcounts and tcounts are provided to electronics module 52 wherein calculation circuit 58 compensates for diaphragm stiffness and fill fluid density effects, and provides a corrected signal representative of the process pressure. The corrected signal is typically subjected to further processing at circuit 60 and converted at circuits 62 and 64 to a digital and an analog signal, respectively, suitable for output from transmitter housing 14.

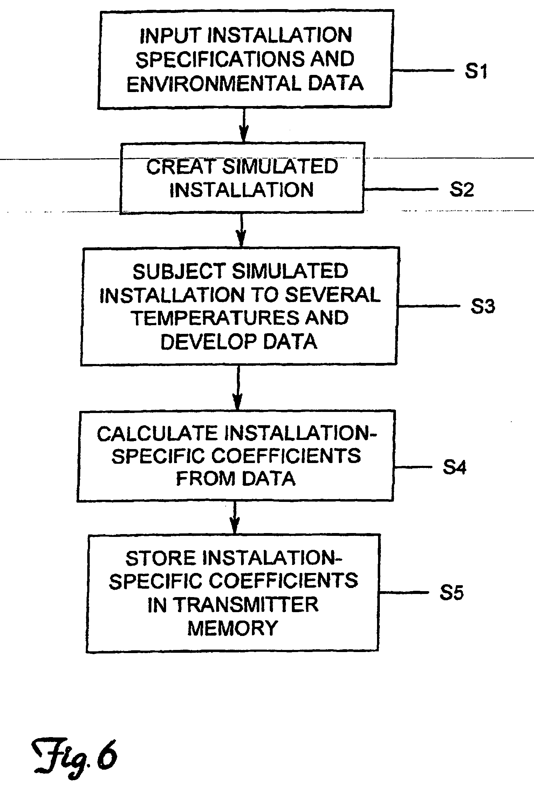

The thermal effect from fill fluid density is dependent on the vertical position of remote diaphragm systems 12 which can be unique to each installation. According to the invention, a characterization procedure is performed for each installation which provides installation specific data to be used with calculation circuit 58 to provide a transmitter output more closely representative of the actual process pressure. One type of characterization procedure is set forth in the flow chart of FIG. 6. information regarding the installation specifications and environmental data is collected at S1. Such information can include the vertical distance H, properties of the remote diaphragm (S), the length of capillary tubes 22, the type offill fluid within each capillary tube 22, typical ranges of process pressure and operating temperature, and the like. Such information is input into a computerprogram which, as shown at $S_2$, simulates the transmitter behavior in the particular Installation. In one embodiment, simulated transmitter output data is calculated using equations such as Equation 1, Equation 5, and Equation 6, as the simulated installation is subjected to the temperatures of -40°F, 0°F, 70°F, 120°F, and 185°F at known process pressures at S3.

The calculated output datapoints, which can be plotted on a graph similar to FIG. 4, are fed into a mathematical program utilizing simple least squares, weighted least squares, spline, or other known techniques to fit the datapoints to an equation such as :

$$P_{Error1} + P_{Error2} = a + bT + cT^2 + dT^3 + \phantom{aaaaaaaaaaaaaaaaaaaaaaaa} \text{Eq. 9}$$

where T is again the fill fluid temperature. Since the calculated datapoints fed to the program were calculated based on the vertical distance H, the fill fluid volume and properties, and so on, the computed coefficients a, b, c, etc. will also reflectthose installation-specific parameters, and hence are referred to as "installation-specific" coefficients. These installation-specific coefficients are then stored in memory at S6 such as EEPROM 70, or other memory accessible by calculation circuit 58.

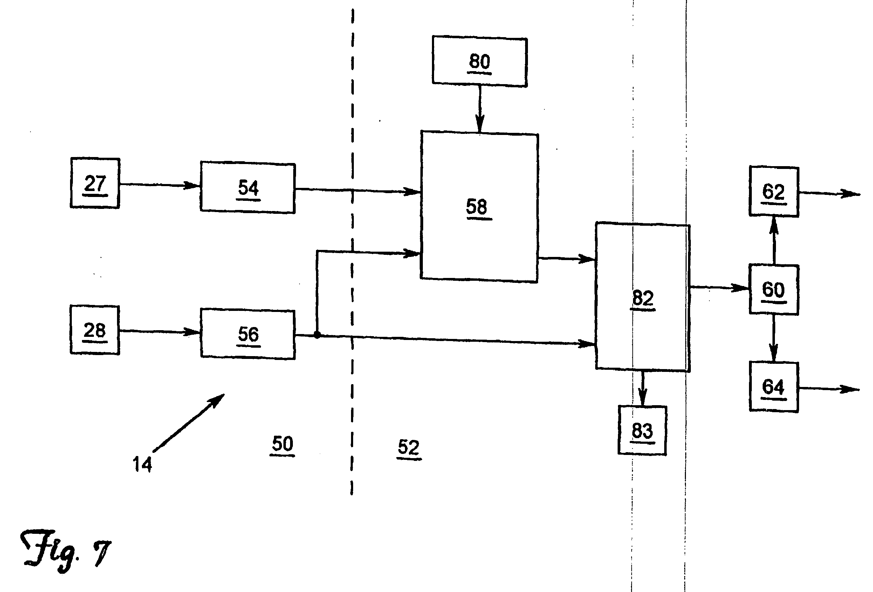

An embodiment of transmitter 11 is shown in FIG. 7. Transmitter 11 contains manufacturer predetermined coefficients in EEPROM 80, which manufacturer predetermined coefficients account for the response to temperature and pressure of components within the transmitter housing but not of the remote diaphragm system with capillary tube. Installation-specific correction circuit 82 is provided which corrects the output of circuit 58 for the temperature response of the remote diaphragm system and capillary tube, i.e. the fill fluid density effect and the diaphragm stiffness effect. Capacitance-To-Digital ASIC 54 is operably connected to calculation circuit 58. Calculation circuit 58 provides an output substantially representative of process pressure but susceptible to substantial errors due to the remote diaphragm system/capillary tube. Resistance-To-Digital ASIC 56 is operably connected to calculation circuit 58 and to correction circuit 82. Memory 83, accessible to correction circuit 82, contains installation specific coefficients, a, b, c, and so on from Equation 9 above. In many applications, the coefficient b, linear with temperature T, is sufficient by itself to provide adequate correction. Correction circuit 82 compensates the output of circuit 58 for $P_{Error1} + P_{Error2}$, thereby providing a corrected signal.

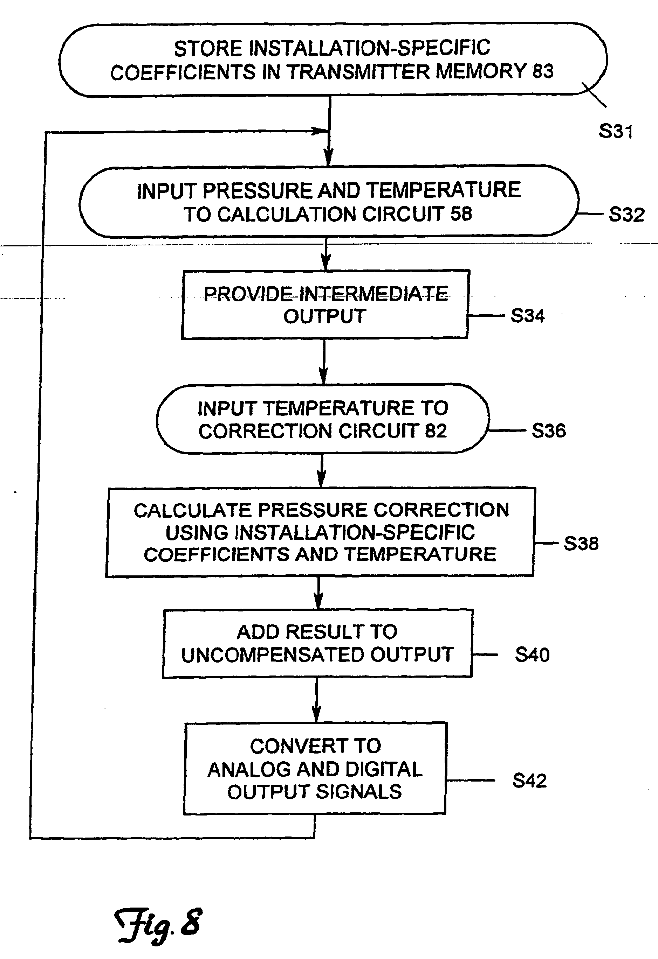

Operation of this embodiment is set forth in the flow chart of FIG. 8. The installation-specific coefficient(s) are preprogrammed into memory 83 at S31. Signals representative of pressure and temperature are input into calculation circuit 58 at S32. Calculation circuit 58 provides an intermediate output which is fed to correction circuit 82 at S34. The signal representative of temperature is also provided to correction circuit 82 at S36. Circuit 82 runs the temperature value through an equation such as Equation 9, using the installation-specific coefficients to obtain a pressure value correction, at S38. The correction, including the fill fluid density effect and the diaphragm stiffness effect, is added to the intermediate outputto provide a corrected output at S40. The corrected output is processed and converted to digital and analog output signals at S42. In one embodiment, the diaphragm stiffness effect is corrected for in circuit 58 and only the fill fluid density effect is corrected for in circuit 82.

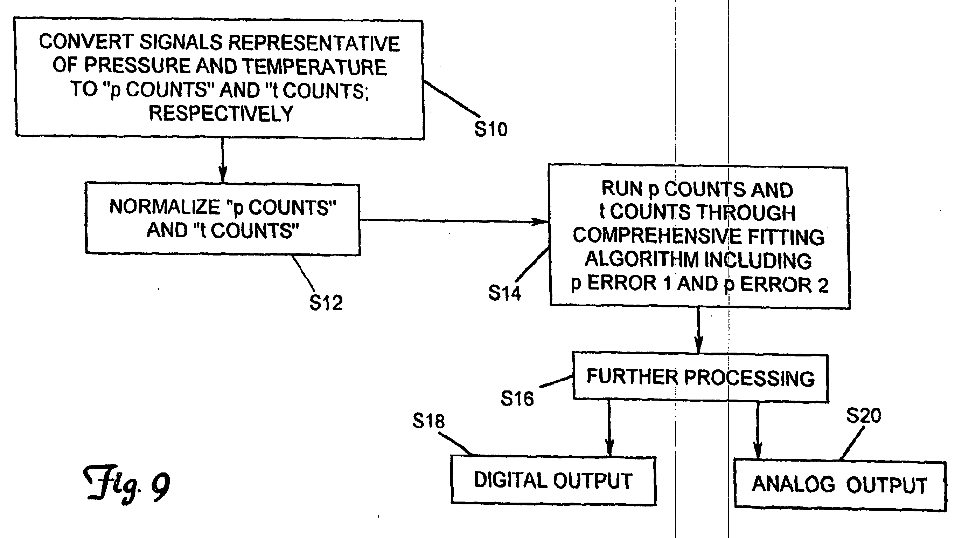

Another embodiment of transmitter 11 in providing a corrected output signal based on sensor inputs and predetermined installation-specific coefficients is shown in the flow chart of FIG. 9. Signals representative of pressure and temperature are converted to pcounts and tcounts at S10, and are normalized at S12. The normalized signals are run through a single polynomial equation, which is preferably 5th order in pressure and 2nd order in temperature, whose coefficients have been calculated and stored in EEPROM 70 so as to correct for both the components within the transmitter housing as well as the remote diaphragm/capillary tube system, including the height H dependent fill fluid density effect.

The corrected signal can be further subject to processing at S16 and is preferably converted to digital and analog output signals at S18, S20.

In the embodiments shown thus far, the temperature sensor disposed in the transmitter housing was used as an indicator of both the temperature of components within the transmitter housing and the temperature of the remote diaphragm/capillary tube system. Such double utilization of the transmitter housing temperature sensor promotes simplicity and reliability. Further, the temperature at the transmitter housing is often a good indicator of temperature at least of the capillary tube and many times of the remote diaphragm.

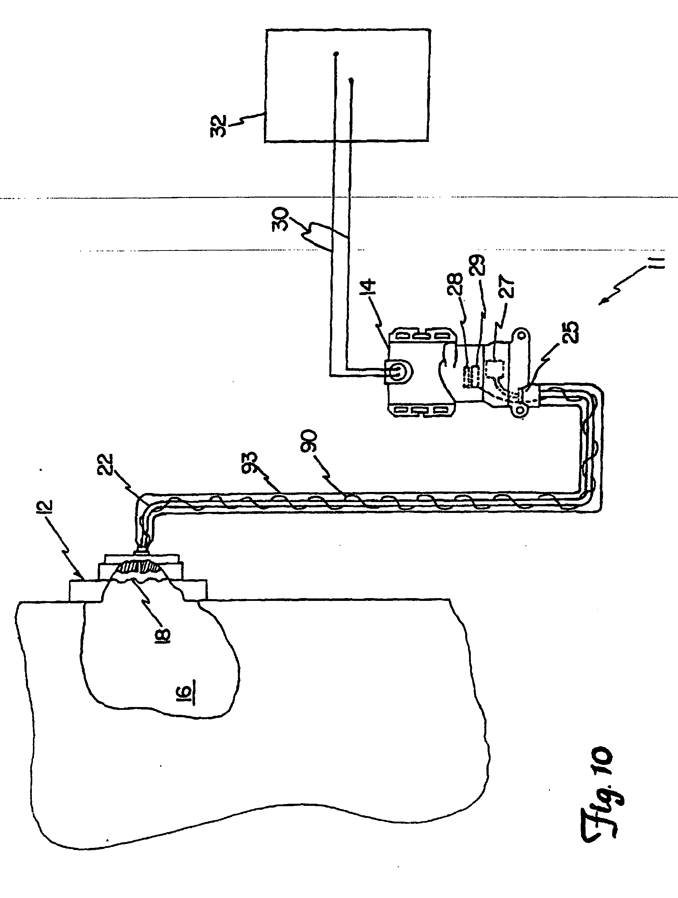

Where more accuracy is required, the transmitter 11 of FIG. 10 employs a separate, distributed temperature sensor to measure the average temperature of the fill fluid contained in capillary tube 22. The separate temperature sensor includes wire 90 of sufficient length to follow capillary tube 22 from transmitter housing 14 to diaphragm system 12 and back again to housing 14. Wire 90 has an end-to-end resistance, measured by circuit 29, which is indicative of its lengthwise-averaged temperature. Wire 90 can comprise any standard thermal couple material. A protective layer 93 covers capillary tube 22 and wire 90. Preferably, protective layer 93 also electrically insulates wire 90. In operation, the output from circuit 29, rather than the conditioned output from housing sensor 28, is provided to the correction circuit 82 of FIG. 7.

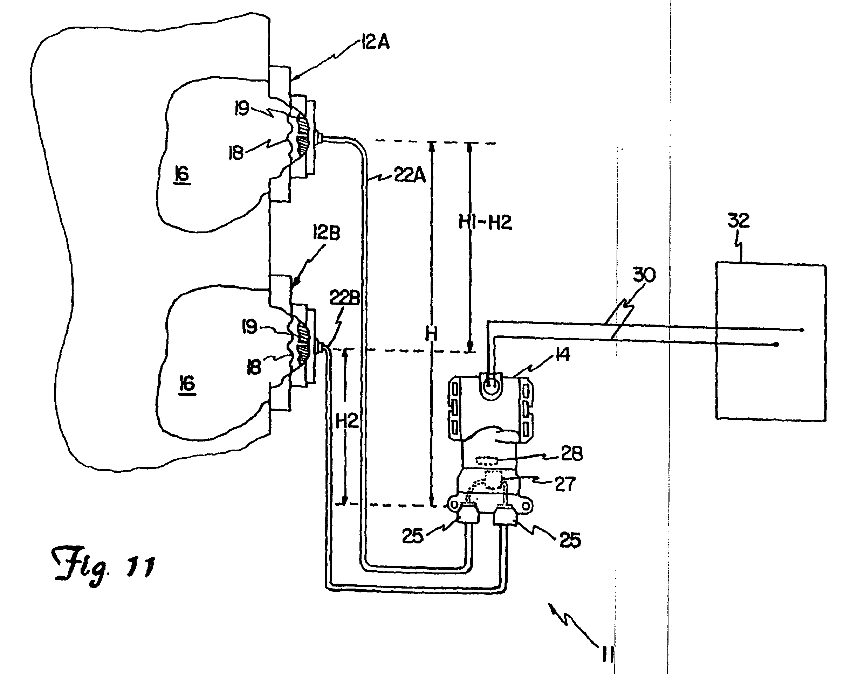

FIG. 11 shows transmitter housing 14 connected to two remote diaphragm systems 12, 12B and suitable for measuring differential pressure of process medium 16. Capillary tubes 22A, 22B connect the respective remote diaphragms to diaphragms 25 at transmitter housing 14. The properties of both remote diaphragms 12A and 12B, and the type and volume of fill fluid in the capillary tubes 22A, 22B, and the elevations $H_1$ and $H_2$, are taken into account in the calculation of the installation-specific coefficients. If capillary tubes 12A, 12B are substantially identical and filled with the same type of fill fluid, then the elevational difference $H_1$-$H_2$ can be used to calculate the net fill fluid density effect.

The previously described embodiments of the present invention have many advantages. Among these include a significant improvement in transmitter accuracy and performance over a temperature range. Additionally, existing transmitters can be supplied with installation specific coefficients and correction algorithms by recharacterizing the transmitter and thus providing backwards compatibility.

**Claims**

1. A transmitter (11) for measuring a process pressure and comprising:

   a pressure sensor (27),
   a temperature sensor (28) providing an input temperature signal representing a fill fluid temperature,
   a first remote pressure sensitive diaphragm (18) disposed at a vertical position (H) and coupled to the pressure sensor (27) by a first capillary tube (22) filled with a fill fluid having a density as a function of the fill fluid temperature, and
   an input circuit (54, 56) operably connected to at least the pressure sensor (27) and providing an intermediate pressure signal at least roughly representative of the process pressure;

   **characterized in that**
   a correcting circuit (58, 82) is provided operably coupled to the temperature sensor (28) and to the input circuit (54, 56) to process the intermediate pressure signal by compensating for the fill fluid density both as a function of the temperature and by reference to the elevation (H) of the first remote pressure sensitive diaphragm (18) and the diaphragm stiffness as a function of said fill fluid temperature by means of a single polynomial equation, in order to provide a compensated output more closely representative of the process pressure.

2. A transmitter (11) as claimed in claim 1, **characterized in that** the correcting circuit (58, 82) comprises:

   a memory (83) suitable for storing at least one installation-specific correction coefficient representative of the elevation (H) of the first remote pressure sensitive diaphragm (18); and
   a processor (58) operably coupled to the memory (83) wherein the processor (58) accesses the correction coefficient and applies the correction coefficient to the input temperature signal to obtain the compensated output.

3. A transmitter (11) as claimed in claim 1, **characterized in that** the compensated output is suitable to be digitally output from the transmitter.

4. A transmitter (11) as claimed in claim 1, **characterized in that** the input circuit (54, 56) comprises an application specific integrated circuit.

**5.** A transmitter (11) as claimed in claim 1, **characterized in that** the correcting circuit (58, 82) can be configured for a selected installation of the transmitter (11).

**6.** A transmitter (11) as claimed in claim 1, **characterized in that** the transmitter has a transmitter housing (14), and **in that** the compensating function of the correcting circuit (58, 82) is dependent on the elevation of the first remote pressure sensitive diaphragm (18) relative to the transmitter housing (14).

**7.** A transmitter (11) as claimed in claim 1, suitable for fluidically coupling the pressure sensor (27) to a second remote diaphragm (18), and **characterized in that** the compensating function of the correcting circuit is dependant on the elevation (H) of the first remote diaphragm (18) relative to an elevation (H2) of the second remote diaphragm (18).

**8.** A method of installing a pressure transmitter (11) comprising a pressure sensor (27) and a first remote pressure-sensitive diaphragm (18) disposed at a vertical position (H) and coupled to the pressure sensor (27) by a first fluid-filled capillary tube (22), the first remote diaphragm (18) being moveable relative to the pressure transmitter (11), the pressure transmitter (11) also comprising a characterization system (54, 56, 58, 62, 60, 64, 70) that receives a pressure signal from the pressure sensor (27) and a temperature signal representing a fill fluid temperature and provides a transmitter output as a function of the pressure and temperature signals, **characterized in that** the method comprises the steps of:

ascertaining the elevation (H) of the first remote diaphragm (18), and
programming the characterization system (54, 56, 58, 62, 60, 64, 70) as a function of the elevation (H) with a series of constants for use in a single polynomial equation varying with said fill fluid temperature for obtaining a more accurate process pressure.

**9.** A method as claimed in claim 8, **characterized in that** the pressure transmitter (11) includes a transmitter housing (14) that carries the pressure sensor (27), the transmitter (11) further including a temperature sensor disposed in the housing (14), and wherein the temperature sensor provides the temperature signal.

**10.** A method as claimed in claim 9, **characterized in that** the elevation (H) of the first remote diaphragm (18) is ascertained relative to the transmitter housing (14).

**11.** A method as is claimed in claim 8, wherein the pressure transmitter (11) further includes a second remote pressure sensitive diaphragm (18) which is coupled to the pressure sensor (27) by a second fluid filled capillary tube (22B), and wherein the elevation of the first remote diaphragm (H) is ascertained relative to an elevation (H2) of the second remote diaphragm (18).

**Patentansprüche**

**1.** Wandler (11) zum Messen eines Prozeßdrucks, der Folgendes aufweist:

einen Drucksensor (27),
einen Temperatursensor (28), der ein Eingangstemperatursignal liefert, das eine Füllfluidtemperatur repräsentiert,
eine erste entfernte druckempfindliche Membran (18), die an einer vertikalen Position (H) angeordnet und mit dem Drucksensor (27) durch ein erstes Kapillarrohr (22) gekoppelt ist, das mit einem Füllfluid gefüllt ist, das eine Dichte als eine Funktion der Füllfluidtemperatur hat, und
eine Eingangsschaltung (54, 56), die mit mindestens dem Drucksensor (27) betriebsmäßig verbunden ist und ein Zwischendrucksignal liefert, das den Prozeßdruck mindestens grob repräsentiert;

**dadurch gekennzeichnet, daß**
eine Korrekturschaltung (58, 82) vorgesehen ist, die mit dem Temperatursensor (28) und der Eingangsschaltung (54, 56) betriebsmäßig gekoppelt ist, um das Zwischendrucksignal zu verarbeiten, indem die Füllfluiddichte sowohl als eine Funktion der Temperatur als auch durch Bezugnahme auf die Höhe (H) der ersten entfernten druckempfindlichen Membran (18) und die Membransteifigkeit als eine Funktion der Füllfluidtemperatur mittels einer einzigen polynomischen Gleichung kompensiert wird, um ein kompensiertes Ausgangssignal zu liefern, das den Prozeßdruck genauer repräsentiert.

**2.** Wandler (11) nach Anspruch 1,
**dadurch gekennzeichnet, daß**
die Korrekturschaltung (58, 82) folgendes aufweist:

einen Speicher (83), der zum Speichern von mindestens einem installationsspezifischen Korrekturkoeffizienten geeignet ist, der die Höhe (H) der ersten entfernten druckempfindlichen Membran (18) repräsentiert; und einen Prozessor (58), der mit dem Speicher (83) betriebsmäßig gekoppelt ist, wobei der Prozessor (58) auf den Korrekturkoeffizienten zugreift und den Korrekturkoeffizienten auf das Eingangstemperatursignal anwendet, um das kompensierte Ausgangssignal zu erhalten.

**3.** Wandler (11) nach Anspruch 1,
**dadurch gekennzeichnet, dass**
das kompensierte Ausgangssignal geeignet ist, um von dem Wandler digital ausgegeben zu werden.

**4.** Wandler (11) nach Anspruch 1,
**dadurch gekennzeichnet, daß**
die Eingangsschaltung (54, 56) eine anwendungsspezifische integrierte Schaltung aufweist.

**5.** Wandler (11) nach Anspruch 1,
**dadurch gekennzeichnet, daß**
die Korrekturschaltung (58, 82) für eine ausgewählte Installation des Wandlers (11) konfiguriert werden kann.

**6.** Wandler (11) nach Anspruch 1,
**dadurch gekennzeichnet, daß**
der Wandler ein Wandlergehäuse (14) hat und die Kompensationsfunktion der Korrekturschaltung (58, 82) von der Höhe der ersten entfernten druckempfindlichen Membran (18) relativ zu dem Wandlergehäuse (14) abhängt.

**7.** Wandler (11) nach Anspruch 1, der zum fluidischen Koppeln des Drucksensors (27) mit einer zweiten entfernten Membran (18) geeignet ist,
**dadurch gekennzeichnet, daß**
die Kompensationsfunktion der Korrekturschaltung von der Höhe (H) der ersten entfernten Membran (18) relativ zu einer Höhe (H2) der zweiten entfernten Membran (18) abhängt.

**8.** Verfahren zur Installation eines Druckwandlers (11), der einen Drucksensor (27) und eine erste entfernte druckempfindliche Membran (18) aufweist, die an einer vertikalen Position (H) angeordnet und mit dem Drucksensor (27) durch ein erstes fluidgefülltes Kapillarrohr (22) gekoppelt ist, wobei die erste entfernte Membran (18) relativ zu dem Druckwandler (11) bewegbar ist, und der Druckwandler (11) ferner ein Charakterisierungssystem (54, 56, 58, 62, 60, 64, 70) aufweist, das ein Drucksignal von dem Drucksensor (27) und ein Temperatursignal, das eine Füllfluidtemperatur repräsentiert, empfängt und ein Wandlerausgangssignal als eine Funktion des Druck- und des Temperatursignals liefert,
**dadurch gekennzeichnet, daß** das Verfahren die folgenden Schritte aufweist:

Bestimmen der Höhe (H) der ersten entfernten Membran (18), und
Programmieren des Charakterisierungssystems (54, 56, 58, 62, 60, 64, 70) als eine Funktion der Höhe (H) mit einer Reihe von Konstanten zur Verwendung in einer einzigen polynomischen Gleichung, die sich mit der Füllfluidtemperatur ändert, um einen genaueren Prozeßdruck zu erhalten.

**9.** Verfahren nach Anspruch 8,
**dadurch gekennzeichnet, daß**
der Druckwandler (11) ein Wandlergehäuse (14) aufweist, das den Drucksensor (27) trägt, wobei der Wandler (11) ferner einen Temperatursensor aufweist,
der in dem Gehäuse (14) angeordnet ist, und wobei der Temperatursensor das Temperatursignal liefert.

**10.** Verfahren nach Anspruch 9,
**dadurch gekennzeichnet, daß**
die Höhe (H) der ersten entfernten Membran (18) relativ zu dem Wandlergehäuse (14) bestimmt wird.

**11.** Verfahren nach Anspruch 8, wobei der Druckwandler (11) ferner eine zweite entfernte druckempfindliche Membran (18) aufweist, die mit dem Drucksensor (27) durch ein zweites fluidgefülltes Kapillarrohr (22B) gekoppelt ist, und wobei die Höhe der ersten entfernten Membran (H) relativ zu einer Höhe (H2) der zweiten entfernten Membran (18) bestimmt wird.

## Revendications

1. Transmetteur (11) pour mesurer une pression de procédé et comprenant :

    un détecteur de pression (27),
    un détecteur de température (28) fournissant un signal de température d'entrée, représentant une température de fluide de remplissage,
    une première membrane éloignée sensible à la pression (18) disposée en une position verticale (H) et couplée au détecteur de pression (27) par un premier tube capillaire (22) rempli d'un fluide de remplissage présentant une densité en tant que fonction de la température de fluide de remplissage, et
    un circuit d'entrée (54, 56) relié de manière fonctionnelle au moins au détecteur de pression (27) et fournissant un signal de pression intermédiaire au moins grossièrement représentatif de la pression de procédé ;

    **caractérisé en ce que**
    il est prévu un circuit de correction (58, 82) couplé de manière fonctionnelle au détecteur de température (28) et au circuit d'entrée (54, 56) afin de traiter le signal de pression intermédiaire en compensant la densité du fluide de remplissage à la fois en fonction de la température et en référence à l'élévation (H) de la première membrane éloignée sensible à la pression (18) et la raideur de diaphragme en tant que fonction de ladite température de fluide de remplissage au moyen d'une équation polynomiale unique, afin de fournir une sortie compensée plus étroitement représentative de la pression de procédé.

2. Transmetteur (11) selon la revendication 1, **caractérisé en ce que** le circuit de correction (58, 82) comprend :

    une mémoire (83) agencée pour stocker au moins un coefficient de correction spécifique de l'installation, représentatif de l'élévation (H) de la première membrane éloignée sensible à la pression (18) ; et
    un processeur (58) couplé de manière fonctionnelle à la mémoire (83) dans lequel le processeur (58) a accès au coefficient de correction et applique le coefficient de correction au signal de température d'entrée afin d'obtenir la sortie compensée.

3. Transmetteur (11) selon la revendication 1, **caractérisé en ce que** la sortie compensée est agencée pour être émise numériquement du transmetteur.

4. Transmetteur (11) selon la revendication 1, **caractérisé en ce que** le circuit d'entrée (54, 56) comprend un circuit intégré spécifique de l'application.

5. Transmetteur (11) selon la revendication 1, **caractérisé en ce que** le circuit de correction (58, 82) peut être configuré pour une installation choisie du transmetteur (11).

6. Transmetteur (11) selon la revendication 1, **caractérisé en ce que** le transmetteur présente un carter de transmetteur (14), et **en ce que** la fonction de compensation du circuit de correction (58, 82) dépend de l'élévation de la première membrane éloignée sensible à la pression (18) par rapport au carter de transmetteur (14).

7. Transmetteur (11) selon la revendication 1, agencé pour coupler de manière fluide le détecteur de pression (27) à une seconde membrane éloignée (18), **caractérisé en ce que** la fonction de compensation du circuit de correction (58, 82) dépend de l'élévation de la première membrane éloignée sensible à la pression (18) par rapport à une élévation (H2) de la seconde membrane éloignée (18).

8. Procédé pour installer un transmetteur de pression (11) comprenant un détecteur de pression (27) et une première membrane éloignée sensible à la pression (18) disposée en une position verticale (H) et couplée au détecteur de pression (27) par un premier tube capillaire rempli de fluide (22), la première membrane éloignée (18) étant mobile par rapport au transmetteur de pression (11), le transmetteur de pression (11) comprenant également un système de caractérisation (54, 56, 58, 62, 60, 64, 70) qui reçoit un signal de pression à partir du détecteur de pression (27) et un signal de température représentant une température de fluide de remplissage et fournit une sortie de transmetteur en tant que fonction des signaux de pression et de température, **caractérisé en ce que** le procédé comprend les étapes consistant à :

déterminer l'élévation (H) de la première membrane éloignée (18) ; et
programmer le système de caractérisation (54, 56, 58, 62, 60, 64, 70) en tant que fonction de l'élévation (H) avec une série de constantes à utiliser dans une équation polynomiale unique variant avec ladite température de fluide de remplissage pour obtenir une pression de procédé plus précise.

9. Procédé selon la revendication 8, **caractérisé en ce que** le transmetteur de pression (11) comprend un carter de transmetteur (14) qui supporte le détecteur de pression (27), le transmetteur (11) comprenant en outre un détecteur de température disposé dans le carter (14) et dans lequel le détecteur de température fournit le signal de température.

10. Procédé selon la revendication 9, **caractérisé en ce que** l'élévation (H) de la première membrane éloignée (18) est déterminée par rapport au carter de transmetteur (14).

11. Procédé selon la revendication 8, dans lequel le transmetteur de pression (11) comprend en outre une seconde membrane éloignée sensible à la pression (18) qui est couplée au détecteur de pression (27) par un second tube capillaire rempli de fluide (22B) et dans lequel l'élévation de la première membrane éloignée (H) est déterminée par rapport à une élévation (H2) de la seconde membrane éloignée (18).

Fig. 1

*Fig. 2*

P ERROR 1

ΔT

P ERROR 2

ΔT  *Fig. 3*

P MEASURED

*Fig. 4*

ΔT

27

54

28

56

58

70

62

60

64

50

52

14

*Fig. 5*

EP 0 812 414 B2

INPUT INSTALLATION
SPECIFICATIONS AND
ENVIRONMENTAL DATA — S1

↓

CREAT SIMULATED
INSTALLATION — S2

↓

SUBJECT SIMULATED
INSTALLATION TO SEVERAL
TEMPERATURES AND
DEVELOP DATA — S3

↓

CALCULATE INSTALLATION-
SPECIFIC COEFFICIENTS
FROM DATA — S4

↓

STORE INSTALATION-
SPECIFIC COEFFICIENTS
IN TRANSMITTER
MEMORY — S5

*Fig. 6*

Fig. 7

STORE INSTALLATION-SPECIFIC
COEFFICIENTS IN TRANSMITTER MEMORY 83

S31

INPUT PRESSURE AND TEMPERATURE
TO CALCULATION CIRCUIT 58

S32

PROVIDE INTERMEDIATE
OUTPUT

S34

INPUT TEMPERATURE TO
CORRECTION CIRCUIT 82

S36

CALCULATE PRESSURE CORRECTION
USING INSTALLATION-SPECIFIC
COEFFICIENTS AND TEMPERATURE

S38

ADD RESULT TO
UNCOMPENSATED OUTPUT

S40

CONVERT TO
ANALOG AND DIGITAL
OUTPUT SIGNALS

S42

Fig. 8

CONVERT SIGNALS REPRESENTATIVE OF PRESSURE AND TEMPERATURE TO "p COUNTS" AND "t COUNTS", RESPECTIVELY — S10

NORMALIZE "p COUNTS" AND "t COUNTS" — S12

RUN p COUNTS AND t COUNTS THROUGH COMPREHENSIVE FITTING ALGORITHM INCLUDING p ERROR 1 AND p ERROR 2 — S14

FURTHER PROCESSING — S16

ANALOG OUTPUT — S20

DIGITAL OUTPUT — S18

*Fig. 9*

Fig. 10

*Fig. 11*